# EUROPÄISCHE PATENTANMELDUNG

(11) **EP 0 530 434 A1**
(43) Veröffentlichungstag der Anmeldung: **10.03.1993**
(21) Anmeldenummer: 92104450.9
(22) Anmeldetag: 16.03.1992
(51) Int. Cl.: G01L 9/00, G01L 19/14

(54) **Druckfühler**

(30) Priorität: 09.08.1991 CH 2363/91
(71) Anmelder: SIEMENS-ALBIS AKTIENGESELLSCHAFT, CH-8047 Zürich (CH); HUBA CONTROL AG, CH-8116 Würenlos (CH)
(72) Erfinder: Lanz, Martin, CH-5244 Birrhard (CH); Brinkhaus,Bernhard, CH-8132 Egg (CH); Schärli, Matthias, CH-5400 Baden (CH); Lieckfeldt, Siegfried, W-7893 Lauchingen (DE); Willi, Walter, CH-8004 Zürich (CH); Strässler, Sigfried, CH-5405 Däattwil (CH)

(57) **Zusammenfassung**

Die Erfindung betrifft einen Druckfühler, der aus einer eine Membran (M) aufweisenden Systemplatte (SP) und einer Basisplatte (BP) oder aus einer mit zwei Systemplatten (SP1, SP2) verbundenen Basisplatte (BP) besteht, die eine offene oder dicht abgeschlossene allenfalls mit einem Referenzdruck versehene Kammer einschliessen. Die Dicke der Basisplatte (BP) ist dabei derart gewählt, dass eine stabilisierende Wirkung auf die Systemplatte (SP) ausgeübt wird. Verformungen der Systemplatte (SP), die insbesondere beim Anbringen eines Gehäuses normalerweise auftreten werden dadurch reduziert. Mechanische Einflüsse vom Gehäuse auf die Systemplatte (SP) werden ferner durch die erfindungsgemässe Anordnung der Verbindungsstellen (GLM) und des Dichtungselementes (DR) vermieden.

## Beschreibung

Die vorliegende Erfindung betrifft einen Druckfühler nach dem Oberbegriff des Patentanspruchs 1.

Zur Messung eines mechanischen Druckes werden oft piezoresistive Druckfühler verwendet. Die Funktion dieser Druckfühler, die meistens auf einem Silizium- oder Keramiksubstrat aufgebaut sind, besteht darin, mechanische Spannungen in ein elektrisches Signal umzuwandeln. Dabei weisen diese Druckfühler normalerweise eine Membran auf, die proportional zu einer auftretenden Druckänderung ausgelenkt wird. Mechanische Spannungen bzw. Dehnungen, die dabei auf der Membranoberfläche auftreten, werden in der Folge, z.B. durch Ausnutzung des piezoresistiven Effekts mittels Messelementen (Widerständen oder integrierten Dehnungsmesselementen (Strain Gauges)) in elektrische Signale umgewandelt. Im Gegensatz zu Widerstandsänderungen, die bei geometrischer Verformung von Metallen auftreten, entstehen Widerstandsänderungen bei der Dehnung von Halbleitern oder Dickschichtwiderständen, wie sie z.B. in Herbert Reichl, Hybridintegration, Heidelberg 1986, auf Seite 47 beschrieben werden, hauptsächlich in Abhängigkeit der auftretenden mechanischen Spannungen im Kristall. Zur Festlegung des Biegeverhaltens der Membran wird diese oft mit entsprechenden geometrischen Formen, z.B. mit konzentrisch angeordneten Nuten, versehen. Vorzugsweise werden dabei jeweils zwei Messelemente, die sich im positiven Dehnungsbereich (Dehnung) befinden, mit zwei Messelementen, die sich im negativen Dehnungsbereich (Stauchung) befinden, zu einer Messbrücke zusammengeschaltet.

Zur kostengünstigen Herstellung eines Druckfühlers wird die mit den Messelementen versehene Membran z.B. dicht mit einem Rohrende verbunden, dessen Querschnittsfläche ein wenig grösser ist als die Membranoberfläche. Das andere Rohrende, das eine entsprechend kleinere Querschnittsfläche aufweist, wird dabei mit einer Leitung verbunden, über die der zu messende Druck zugeführt wird. Nachteilig bei dieser Lösung ist, dass die Eigenschaften derart gefertigter Druckfühler bezüglich Empfindlichkeit, Linearität und Temperaturverhalten unbefriedigend sind. Verursacht werden diese Probleme primär durch die Übertragung mechanischer Spannungen vom Rohr bzw. Gehäuse, dessen Abmessungen sich in Abhängigkeit der Temperatur stetig ändern, auf die Membran. Insbesondere wird die Membran beim Einspannen in die entsprechenden Gehäuseteile oft auch verbogen. D.h. es werden störende mechanische Momente auf die Membran übertragen.

Der vorliegenden Erfindung liegt daher die Aufgabe zugrunde, einen Druckfühler zu schaffen, der eine verbesserte Messgenauigkeit und eine erhöhte Temperaturstabilität aufweist. Insbesondere soll dadurch eine verbesserte Linearität und eine reduzierte Hysterese erzielt werden. Einspanneffekte, die z.B. durch das Einspannen der Membran in ein Gehäuse entstehen können, sollen soweit reduziert werden, dass deren Einfluss auf das Messverhalten des Druckfühlers vernachlässigbar ist.

Diese Aufgabe wird durch die im kennzeichnenden Teil des Patentanspruchs 1 angegebenen Massnahmen gelöst. Vorteilhafte Ausgestaltungen der Erfindung sind in werteren Ansprüchen angegeben.

Erfindungsgemässe Druckfühler weisen eine verbesserte Linearität und Hysterese auf. Vom Gehäuse des Druckfühlers werden praktisch keine mechanischen Spannungen oder Momente auf die Membran übertragen. Die Messgenauigkeit und das Temperaturverhalten des Druckfühlers werden dadurch stark verbessert. Durch weitere erfindungsgemässe Massnahmen wird der Druckfühler ferner gegen Zerstörung durch auftretenden Überdruck geschützt. Ferner besteht die Möglichkeit, die Messelemente vor den Einwirkungen des Mediums zu schützen.

Die Erfindung wird nachfolgend anhand einer Zeichnung beispielsweise näher erläutert. Dabei zeigt :
- Fig. 1: einen bekannten mit einem Gehäuse versehenen Druckfühler
- Fig. 2: einen erfindungsgemässen mit einem Gehäuse versehenen Druckfühler mit einer für die Bestückung von Bauteilen vorgesehenen Zone
- Fig. 3: einen Druckfühler gemäss Fig. 2 mit symmetrisch angeordneter für die Bestückung von Bauteilen vorgesehener Zone
- Fig. 4: einen erfindungsgemässen Druckfühler zur Messung eines Differenzdruckes
- Fig. 5: einen erfindungsgemässen Druckfühler mit spezieller Druckzufuhr
- Fig. 6: einen erfindungsgemässen Druckfühler mit einem ersten bevorzugten Gehäuse
- Fig. 7: einen erfindungsgemässen Druckfühler mit einem zweiten bevorzugten Gehäuse

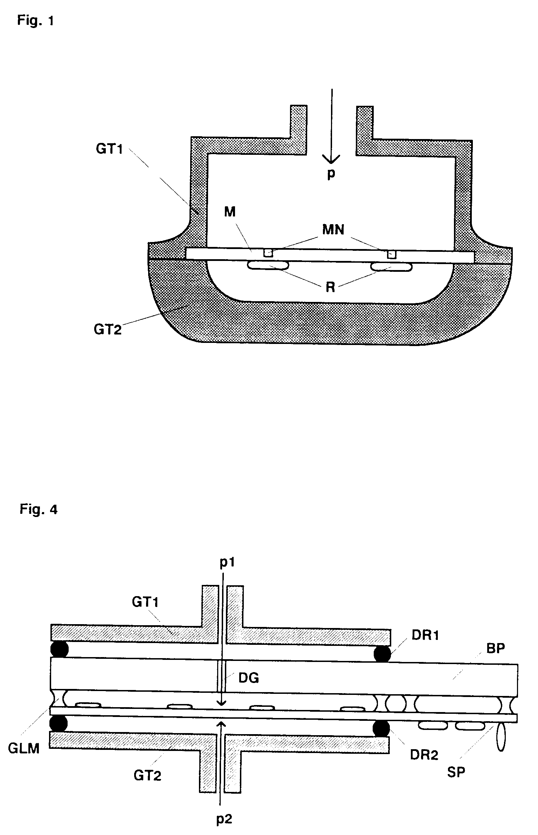

Fig. 1 zeigt die Schnittdarstellung eines bekannten Druckfühlers, in dem eine Membran M mit einer z.B. kreisförmigen Membrannute MN und zwei Messelementen R zwischen zwei Gehäuseteilen GT1, GT2 fest eingespannt ist. Durch eine Öffnung im Gehäuseteil GT1 wird dem Druckfühler ein zu messender Druck p zugeführt, der eine Auslenkung der Membran M bewirkt Proportional zu dieser Auslenkung treten dabei Dehnungen an der Membranoberfläche auf, die durch die Messelemente in elektrische Signale umgewandelt werden. Nachteilig bei diesem Druckfühler ist, dass durch die Verbindung der Membran M mit den Gehäuseteilen GT1, GT2 mechanische Spannungen und Momente auf die Membran M übertragen werden, die sich kaum kompensieren lassen und die keine reproduzierbaren Messeigenschaften des Druckfühlers zulassen. Bei thermischen Veränderungen treten dabei beträchtliche Änderungen dieser mechanischen Einwirkungen auf, die das Verhalten des Druckfühlers werter verschlechtern.

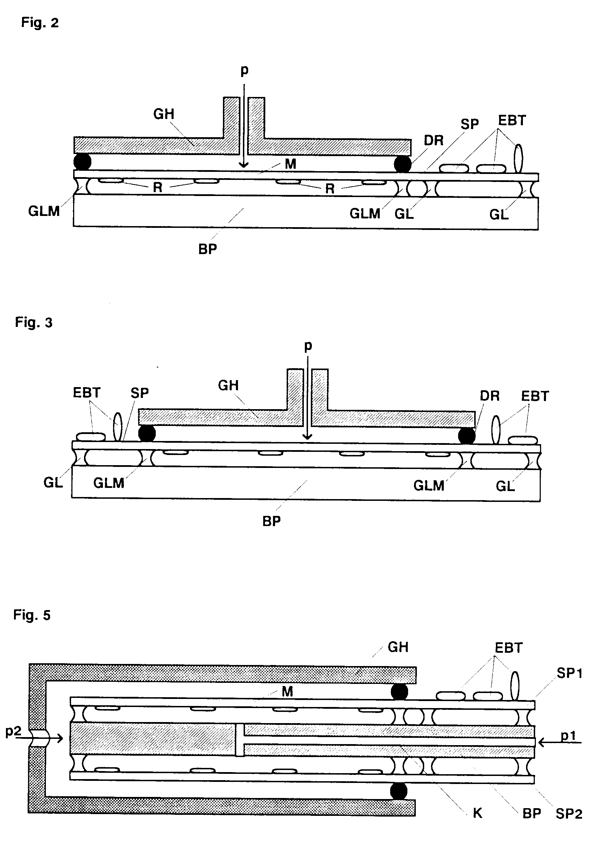

Der in Fig.2 gezeigte erfindungsgemässe Druckfühler besteht aus einer mit einer Basisplatte BP verbundenen Systemplatte SP, die aus einer Membranzone und einer vorzugsweise vorgesehenen mit elektronischen Bauteilen zu bestückenden Zone besteht. Die beiden Platten SP und BP sind an verschiedenen Stellen mit Glaslot GL bzw. GLM miteinander verbunden. Von primärer Bedeutung sind dabei die Verbindungsstellen GLM, durch die die aktive Membranfläche definiert wird und die daher am Rande der Membranzone angeordnet sind und durch die zwischen den Platten BP und SP eine feste Verbindung hergestellt wird. Nach Wunsch kann die Verbindungsstelle GLM auch derart (z.B. ringförmig) vorgesehen werden, dass zwischen den Platten BP, SP eine dicht abgeschlossene Kammer entsteht, die nötigenfalls mit einem Referenzdruck (z.B. Vakuum) versehen wird. Die Basisplatte BP verleiht der Systemplatte SP eine hohe Stabilität und macht sie weitgehend unempfindlich gegen äussere mechanische Einflüsse, die z.B. beim Einbau in ein Gehäuse auftreten. Voraussetzung dabei ist, dass die Basisplatte BP selbst über genügend Stabilität verfügt. Bei der Verwendung von Keramik für die Platten BP und SP wird die Dicke der Basisplatte BP dabei mindestens dreimal grösser als die Dicke der Systemplatte SP gewählt. Bei der Verwendung von Ausnehmungen in der Membran M (z.B. Nuten) wird die Dicke der Basisplatte BP vorzugsweise mindestens dreimal grösser als die bei den Ausnehmungen verbleibende Restdicke der Systemplatte SP gewählt. Die Wahl gleichen Materials bzw. von Material mit gleichen Ausdehnungskoeffizienten für die Platten BP und SP ist vorzuziehen, um unterschiedliche Ausdehnungen der Platten BP und SP bei ändernder Temperatur zu vermeiden. Über der Membran M ist ferner ein Gehäuseteil GT gezeigt, der eine Öffnung für die Zufuhr eines Druckes p aufweist und der mit der Systemplatte SP über ein vorzugsweise elastisches Dichtungselement DR, z.B. einen Gummiring, dicht verbunden ist. Durch die Elastizität des Dichtungselementes DR wird dabei verhindert, dass sich Dehnungen, die sich durch unterschiedliche Ausdehnungskoeffizienten ergeben, vom Gehäuse auf die Systemplatte SP übertragen. Damit beim Anbringen des Gehäuses und somit beim Festpressen des Dichtungselementes DR keine Verbiegung der Membran M auftritt, werden das Dichtungselement DR und die vorzugsweise aus einem Glaslot bestehenden Verbindungen GLM direkt übereinander vorgesehen. Das Gehäuse mit dem Teil GT wird dabei vorzugsweise über weitere elastische Elemente mit der Basisplatte BP derart verbunden, dass der Gehäuseteil GT auf das Dichtungselement DR aufgepresst wird.

Die weiteren Verbindungsstellen GL dienen zur Fixierung der für die Bestückung mit elektronischen Bauteilen EBT vorgesehenen Zone. Diese vorzugsweise vorgesehene Zone, die z.B. mit einer Messbrücke bestückt ist, wird fest mit der Basisplatte BP verbunden, um allfällige, z.B. durch den Einbau in das Gehäuse entstehende Verbiegungen oder Vibrationen zu vermeiden. Um eine einseitige Verspannung oder unterschiedliche thermische Einwirkungen auf die Membran M zu vermeiden, kann die für die elektronischen Bauteile EBT vorgesehene Zone, wie in Fig.3 gezeigt auch symmetrisch um die Membranzone herum angeordnet werden. Entsprechend ist die gleichmässige Verteilung der Verbindungsstellen GL anzustreben. Durch diese daraus resultierende allseits gleichartige Befestigung der Membran M wird eine weitere Verbesserung der Linearität erzielt. Zusätzlich können dadurch einseitige thermische Einwirkungen vom Gehäuse oder den Bauteilen EBT vermieden werden. Aus Fig. 2 und 3 ist ferner ersichtlich, dass die Messelemente R dem Medium nicht ausgesetzt und auf der Rückseite der Membran M vorgesehen sind. Um die Bestückung der Systemplatte SP mit Bauteilen EBT zu erleichtern, werden diese vorzugsweise auf der den Messelementen R abgewandten Seite der Systemplatte SP vorgesehen.

Fig. 4 zeigt einen zur Messung eines Differenzdruckes geeigneten Druckfühler, der aus einem über ein Dichtungselement DR1 mit der einen Durchgang DG aufweisenden Basisplatte BP verbundenen Gehäuseteil GT1 und einem über ein weiteres Dichtungselement DR2 mit der Systemplatte SP verbundenen Gehäuseteil GT2 besteht. Dabeitreten ein Druck p1 durch eine Öffnung des Gehäuseteils GT1 und den Durchgang DG in der Basisplatte BP auf die erste Seite und ein Druck p2 durch eine Öffnung des Gehäuseteils GT2 auf die zweite Seite der Membran M auf, die sich entsprechend dem verbleibenden Differenzdruck (p1 - p2) verbiegt.

In Fig. 5 ist ein Druckfühler gezeigt, in dem zwei Systemplatten SP1, SP2 über Verbindungen GLM1, GLM2 dicht mit einer Basisplatte BP verbunden sind. Der zu messende Druck P1 wird dabei im Gegensatz zu den bisher beschriebenen Druckfühlern über einen in der Basisplatte BP vorgesehenen Kanal K den Membranen der Systemplatten SP1, SP2 zugeführt. Die Addition der von beiden Systemplatten SP1, SP2 abgegebenen Signale führt dabei zu einer Verdoppelung der Empfindlichkeit dieses Druckfühlers gegenüber den eingangs beschriebenen Ausführungen. Selbstverständlich ist jedoch auch die vorteilhafte Verwendung einer mit einem entsprechenden Kanal K versehenen Basisplatte BP zusammen mit nur einer Systemplatte SP möglich. Besonders vorteilhaft ist der Druckfühler gemäss Fig. 5 zur Messung verschiedener Drücke und Differenzdrücke in verschiedenen Zeitintervallen geeignet. Dabei ist für jede separat zugeführte Druckleitung ein Kanal in der Basisplatte BP vorzusehen. Über die Druckleitungen können dem Druckfühler in den entsprechenden Zeitintervallen die zu messenden Drücke und Dffierenzdrücke zugeführt werden.
Ferner besteht die Möglichkeit, den gezeigten Druckfühler mit einem Gehäuse GH zu versehen, das eine Öffnung zur Zufuhr eines Druckes p2 aufweist. Den Membranoberseiten der Systemplatten SP1, SP2 wird dabei der Druck p2 und den mit den Messelementen versehenen Membranunterseiten der Systemplatten SP1, SP2 der Druck p1 zugeführt. Gemessen wird dabei jeweils die Differenz der Drücke p1, p2.

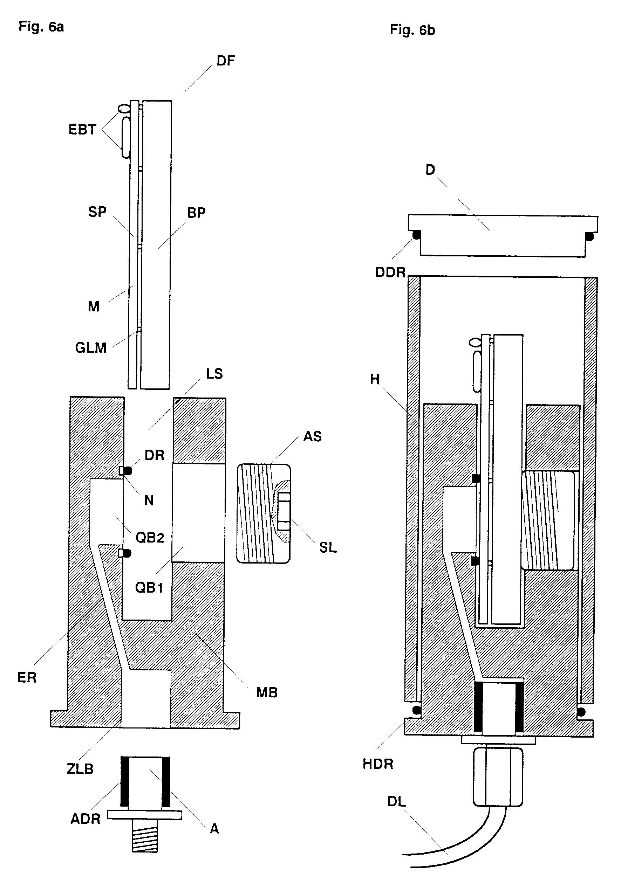

In Fig. 6a sind zwei miteinander verbundene Platten SP und BP sowie Gehäuseteile gezeigt, die sich mit wenigen Handgrffien zu einem einsatzbereiten Druckfühler zusammenbauen lassen, der gemäss Fig. 6b eine kompakte Form aufweist und universell einsetzbar ist. Der Druckfühler DF hat in der beispielsweise gezeigten Darstellung die Form einer Patrone, die sich z.B. in eine Öffnung einschieben oder einschrauben oder einfach über ein Anschlussstück A mit einer Druckleitung DL verbinden lässt. Durch den Einbau des Druckfühlers DF in Längsrichtung ergeben sich dabei sehr kleine Gehäuseabmessungen.

In Fig. 6a sind die wesentlichen Teile des Gehäuses vor dem Einschub der Platten BP und SP gezeigt. Kernstück ist dabei ein mehrere Bohrungen QB1, QB2, ER und einen Längsschlitz aufweisender, vorzugsweise zylinderförmiger Montageblock MB. Von der Rückseite her, in Richtung der Längsachse ist im Montageblock MB ein Längsschlitz vorgesehen, der zur Aufnahme des Platten BP, SP geeignet ist. Orthogonal zum Längsschlitz bzw. zu den Platten BP, SP sind auf der Höhe der Membran M der Systemplatte SP zwei vorzugsweise koaxiale Bohrungen QB1 und QB2 vorgesehen. Der Durchmesser der Bohrung QB2 ist dabei etwa gleich oder kleiner als der Durchmesser der Membran M gewählt. Am Rand der Bohrung QB2 ist eine vorzugsweise kreisrunde Nut N vorgesehen, in die sich ein Dichtungsring DR einfügen lässt. Die Lage der Nut N ist dabei derart vorgesehen, dass der Dichtungsring DR jeweils den Verbindungsstellen GLM der miteinander verbundenen Platten BP, SP gegenüberliegt. Der Durchmesser der Bohrung QB1 ist zumindest so gross gewählt, dass die Bohrung QB2 und die Nut N in den Montageblock eingearbeitet werden können. Ferner soll auch der Dichtungsring DR durch die Bohrung QB1 in die Nut N einlegbar sein. In die Bohrung QB1 soll ferner ein Anpresselement AS derart einpress- oder einschraubbar sein, dass die den Verbindungselementen GLM gegenüberliegende Randzone der Membran M durch das Einschrauben des Anpresselementes AS fest auf den Dichtungsring DR gedrückt wird. Das gezeigte Anpresselement AS, das beispielsweise ein Gewinde und ein Sechskantloch aufweist, wird dabei mit Hilfe eines entsprechenden Werkzeugs, vorzugsweise mit einem Schlüssel, dessen Moment einstellbar ist, in den Montageblock MB eingeschraubt. Gemäss Fig. 6b wird der Druckfühler DF vom eingeschraubten Anpresselement AS gegen den Dichtungsring DR gedrückt. Mit Hilfe des Momentenschlüssels wird die Anpresskraft vorzugsweise derart eingestellt, dass der Dichtungsring DR fest in die Nute N, die Systemplatte SP jedoch nicht an die Seitenwand des Längsschlitzes LS gepresst wird.
Schräg zur Längsachse, von der Bohrung QB2 vorztugsweise zur Frontseite des Montageblocks MB, führt eine Bohrung ER, über die der Membran M der zu messende Druck zuführbar ist. Der Montageblock kann dabei mit einem Gewinde versehen werden und frontal in ein Druckgefäss eingeschraubt werden. Zusätzlich kann an der Frontseite jedoch eine Bohrung ZLB vorgesehen werden, in die ein mit einer Druckleitung DL verbindbares Anschlussstück A mit einer Dichtung ADR einsetzbar ist. Zum Abschliessen der beschriebenen zusammengebauten Teile wird gemäss Fig. 6b eine Hülse H mit einem Dichtungsring HDR und ein dazu passender Deckel D mit einem Dichtungsring DDR verwendet. Der Montageblock MB, die Hülse H und der Deckel D sind dabei vorzugsweise mit entsprechenden Gewinden versehen und veschraubbar.

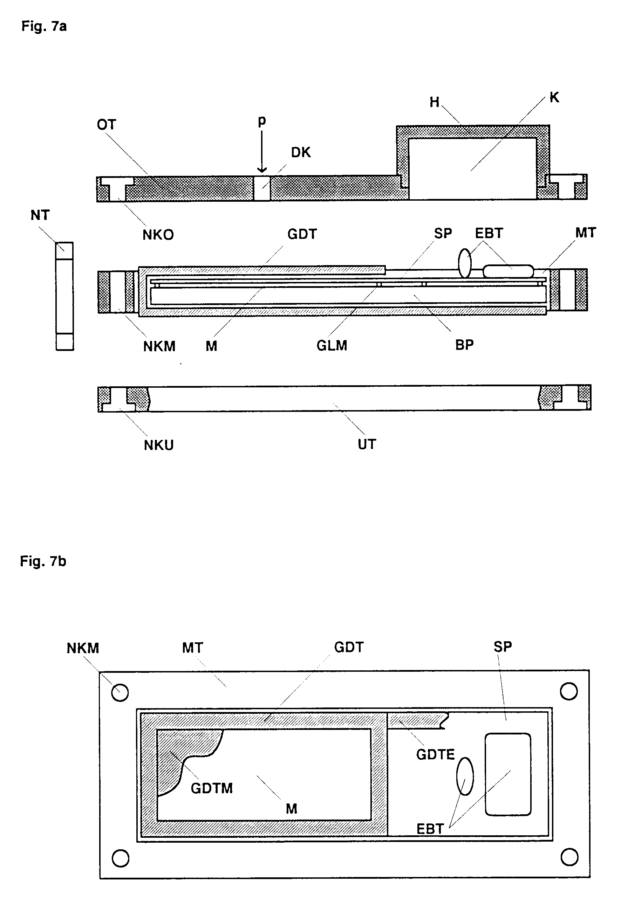

In Fig 7 sind die Einzelteile eines weiteren vorteilhaften Gehäuses gezeigt, das zur Aufnahme der Platten BP und SP geeignet ist. Das Gehäuse besteht gemäss Fig. 7a aus einem Unterteil UT, einem Mittelteil MT und einem Oberteil OT, die durch Verbindungsmittel NT, z.B. Nietbolzen, fest verbindbar sind. Die miteinander verbundenen Platten BP und SP werden dabei von einer elastischen Lage GDT, z.B. einer Gummidichtung, zumindest teilweise derart überdeckt, dass die Membranfläche freigehalten bzw. umrahmt wird. Die Membran M kann jedoch mit einer mit der Lage GDT verbundenen Lage GDTM überdeckt sein, deren Dicke im Verhältnis zur Dicke der Lage GDT kleiner ist. Die zusätzliche Lage GDTM wirkt dabei auf die die Membran M umgebende Umrahmung stabilisierend, ohne beim Zusammenbau oben genannter Teile selbst einen Druck auf die Membran M auszuüben. Die Basisplatte BP und die Systemplatte SP mit Ausnahme der für die Membran M und zu bestückenden Bauteile vorgesehenen Zonen werden dabei ganz oder teilweise mit der Lage GDT versehen. Falls die Lage GDT nur teilweise vorgesehen wird, sollte darauf geachtet werden, dass die Platten BP, SP beim Zusammenbau des Gehäuses nicht ungleichmässig belastet werden. Am einfachsten wird die Lage GDT dabei einteilig gewählt, so dass sie mit nur einem Handgriff über die Platten BP, SP gelegt werden kann.

Die mit der Lage GDT umfassten Platten BP, SP werden in die im Mittelteil MT vorgesehene Öffnung eingelegt, wonach das Unterteil UT und das Oberteil OT mit dem Mittelteil MT durch die Nietbolzen NT fest verbunden werden. Die gemäss Fig. 7b ausserhalb der Membran M vorgesehene Umrahmung liegt dabei senkrecht über den zwischen den Platten BP, SP vorgesehenen Verbindungsstellen GLM. Dadurch wird wiederum verhindert, dass beim Zusammenpressen der elastischen Lage GDT eine Verspannung der Membran M eintritt. D.h. durch das Zusammenpressen wird lediglich ein Druck auf die Verbindungsstellen GLM und nicht auf die Membran M ausgeübt. Durch die Wahl der Dicke der Lage GDT im Verhältnis zur Höhe des Mittelteils MT und der Dicke der miteinander verbundenen Platten SP, BP wird dabei der zur Verbindung der Teile UT, MT und OT notwendige Anpressdruck festgelegt. Dabei können Teile GDTE der Lage GDT auch auf der den Bauteilen EBT Seiten der Platten BP, SP vorgesehen werden. Dadurch wird erreicht, dass der beim Zusammenfügen aller Gehäuseteile auf die Platten BP und SP einwirkende Druck gleichmässig verteilt wird. Selbstverständlich wird dabei die Membran M durch die oben beschriebenen Massnahmen von einem durch den Zusammenbau der Gehäuseteile verursachten Druck freigehalten. Nach dem Zusammenbau der Gehäuseteile entsteht innerhalb der die Membran M umgebenden Umrahmung eine dicht abgeschlossene Kammer, der über einen im Oberteil OT vorgesehenen Kanal DK ein Druck p zuführbar ist. Im Oberteil OT ist, falls die Systemplatte SP mit Bauteilen EBT bestückt ist, eine Kammer K zum Abdecken dieser Bauteile EBT vorgesehen. Damit die Bauteile EBT bzw. die Messschaltung für nachträgliche Einstellungen zugänglich bleiben, kann die Kammer K durch Abheben einer zusätzlich vorgesehenen Haube H geöffnet werden. In fachmännischer Weise ist z.B. im Oberteil OT ferner ein Kanal für die Zuführung der notwendigen Anschlusskabel vorzusehen.

Das Einlegen der mit der Lage GDT versehenen Platten BP, SP und der Zusammenbau der genannten Gehäuseteile UT, MT und OT erfolgt dabei mit wenigen Handgriffen. Dabei wird die Membran M dicht umschlossen, ohne dass störende, die Messeigenschaften des Druckfühlers beeinflussende Spannungen auf deren Oberfläche auftreten.

Die Richtung und das Mass der Auslenkung der Membran der in Fig. 2 bis Fig. 7 beschriebenen Druckfühler wird dabei durch den Unterschied der an der Ober- und Unterseite der Membran auftretenden Druckverhältnisse bestimmt. Bei einer zu weiten Auslenkung der Membran, die beim Auftreten von Drücken ausserhalb des vorgesehenen Messbereiches auftreten kann, besteht die Gefahr des Überdehnens und Aufreissens der Membran, was zur Zerstörung des Druckfühlers führt. Daher wird der Abstand zwischen den Platten BP und SP derart gewählt, dass die Membran entsprechend diesem Abstand nur soweit ausgelenkt werden kann, dass keine übermässige Dehnung der Membran auftreten kann. Eine weitere Auslenkung bei steigendem Druck wird dabei durch die der Membran entgegenstehende Basisplatte BP verhindert. Zur Verhinderung der Zerstörung nicht nur bei auftretendem Über- sondern auch bei Unterdruck wird vorzugsweise beidseitig der Systemplatte SP eine Basisplatte BP vorgesehen. Die Auslenkung der Membran M ist daher beidseitig begrenzt. Erfindungsgemässe Druckfühler sind daher gegen Zerstörung bzw. Bersten verursacht durch Überdruck weitgehend geschützt.

## Patentansprüche

1. Druckfühler mit einer Systemplatte (SP), die zumindest eine Membran (M) und zumindest ein damit verbundenes Messelement (R) aufweist, **dadurch gekennzeichnet**, dass die Systemplatte (SP) über eine oder mehrere am Rand der Membran (M) vorgesehene Verbindungen (GLM) ein- oder beidseitig mit einer bzw. zwei über den gesamten Druckmessbereich zumindest annähernd stabilen Basisplatten (BP) verbunden ist.

2. Druckfühler nach Anspruch 1, **dadurch gekennzeichnet**, dass die Platten (BP, SP) aus Keramik und die Verbindungen (GLM) aus Glaslot bestehen und dass die Basisplatte (BP) zumindest dreifach so dick wie die Systemplatte (SP) gewählt ist.

3. Druckfühler nach Anspruch 1 oder 2, **dadurch gekennzeichnet**, dass die Systemplatte (SP) über ein vorzugsweise elastisches Dichtungselement (DR) derart mit einem Gehäuseteil (GT) verbunden ist, dass über der Membran (M) eine dicht abgeschlossene Kammer besteht, der über eine Öffnung im Gehäuseteil (GT) der zu messende Druck zugeführt wird und dass das Dichtungselement (DR) und die am Rand der Membran (M) angeordneten Verbindungen (GLM) zumindest annähernd vertikal übereinander angeordnet sind.

4. Druckfühler nach Anspruch 1, 2 oder 3, **dadurch gekennzeichnet,** dass eine Öffnung in einem Gehäuseteil (GT1) und zumindest ein Durchgang (DG) in der Basisplatte (BP) vorgesehen ist, durch die ein erster Druck auf die eine Seite der Membran (M) und dass eine Öffnung in einem weiteren Gehäuseteil (GT2) vorgesehen ist, durch die ein zweiter Druck auf die andere Seite der Membran (M) zuführbar sind.

5. Druckfühler nach einem der Ansprüche 1 oder 2, **dadurch gekennzeichnet**, dass in der Basisplatte (BP) zumindest ein Kanal (K1, ..., Kn) zur gleichzeitigen oder zeitverschobenen Zuführung eines oder mehrerer Drücke (p1, ..., pn) zu einer ersten und/oder zweiten mit der Basisplatte (BP) verbundenen Systemplatte (SP1, SP2) vorgesehen ist.

6. Druckfühler nach einem der vorhergehenden Ansprüche, **dadurch gekennzeichnet**, dass die Systemplatte (SP) aus einer Membranzone und einer Zone zur Bestückung mit Bauteilen (EBT) besteht, die vorzugsweise auf der Basisplatte (BP) durch weitere Verbindungen (GL) fixierbar ist.

7. Druckfühler nach Anspruch 6, **dadurch gekennzeichnet**, dass die mit Bauteilen (EBT) zu bestückende Zone derart um die Membranzone angeordnet und mit der Basisplatte (BP) verbunden ist, dass die mechanischen und/oder thermischen Einwirkungen von der zu bestückenden Zone auf vorzugsweise alle Seiten der Membran (M) zumindest annähernd gleich verteilt sind.

8. Druckfühler nach einem der vorhergehenden Ansprüche, **dadurch gekennzeichnet**, dass die Messelemente (R) auf der dem Medium abgewandten Seite und/oder die Bauteile (EBT) auf der für die Bestückung leichter zugänglichen Seite der Systemplatte (SP) vorgesehen sind.

9. Druckfühler nach einem der vorhergehenden Ansprüche, **dadurch gekennzeichnet**, dass der Abstand zwischen der Systemplatte (SP) und der Basisplatte (BP) derart gewählt ist, dass die Auslenkung der Membran (M) nach der Überschreitung eines vorbestimmten Maximaldruckes durch die Basisplatte (BP) begrenzt wird.

10. Druckfühler nach einem der vorhergehenden Ansprüche, **dadurch gekennzeichnet**, dass durch die Membran (M), die Verbindungsstellen (GLM) und die Basisplatte (BP) eine dicht abgeschlossene oder abschliessbare Kammer gebildet wird, in der ein Referenzdruck vorgesehen oder vorsehbar ist und dass Änderungen dieses Referenzdruckes vorzugsweise kompensierbar sind.

11. Druckfühler nach einem der vorhergehenden Ansprüche, **dadurch gekennzeichnet**, dass ein Montageblock (MB) vorgesehen ist, der einen zur Aufnahme der miteinander verbundene Platten (BP, SP) vorgesehenen Längsschlitz (LS) und drei Bohrungen (QB1, QB2 und ER) aufweist, dass die zur Aufnahme eines Anpresselementes (AS) geeignete erste Bohrung (QB1) von der Aussenseite des Montageblocks (MB) bis zum Längsschlitz (LS) und zumindest annähernd orthogonal zu diesem vorgesehen ist, dass die zweite Bohrung (QB2) annähernd koaxial zur ersten Bohrung (QB1) auf der andern Seite des Längsschlitzes (LS) vorgesehen und mit einer dritten Bohrung (ER) verbunden ist, die zu einer für die Druckzufuhr vorgesehenen Stelle inner- oder ausserhalb des Montageblocks (MB) führt.

12. Druckfühler nach Anspruch 11, **dadurch gekennzeichnet**, dass innerhalb des Längsschlitzes (LS) annähernd konzentrisch zur Bohrung (QB2) eine zur Aufnahme eines Dichtungsringes (DR) geeignete Nut (N) vorgesehen ist und dass der Durchmesser der Bohrung (QB1) derart gewählt ist, dass Werkzeuge zur Einarbeitung der Bohrung (QB2) und der Nut (N) durch die Bohrung (QB1) einführbar sind.

13. Druckfühler nach Anspruch 11 oder 12, **dadurch gekennzeichnet**, dass der Montageblock (MB) zylinderförmig ausgebildet ist, den Längsschlitz (LS) auf der Rückseite und den Austritt der Bohrung (ER) auf der Frontseite aufweist.

14. Druckfühler nach Anspruch 13, **dadurch gekennzeichnet**, dass der Montageblock (MB) frontseitig mit einer Druckleitung oder einem Druckbehälter verbindbar ist oder dass der Montageblock (MB) eine weitere Bohrung (ZLB) aufweist, in die ein mit einer Druckleitung (DL) verbindbarer Anschluss (A) einsetzbar ist.

15. Druckfühler nach einem der Ansprüche 11 bis 14, **dadurch gekennzeichnet**, dass der Montageblock (MB) mit einer Hülse (H) und einem Deckel (D) abschliessbar ist.

16. Druckfühler nach einem der Ansprüche 1 bis 10, **dadurch gekennzeichnet**, dass ein Gehäuse mit einem Unterteil (UT), einem Mittelteil (MT) und einem Oberteil (OT), die durch Verbindungsmittel (NT) fest miteinander verbindbar sind, vorgesehen ist, dass das Mittelteil (MT) eine Ausnehmung aufweist, in die die mit einer ein- oder mehrteiliegen elastischen Lage (GDT) versehenen Platten (BP und SP) einsetzbar sind, dass die Lage (GDT) zumindest die auf der Systemplatte (SP) vorgesehene Membran (M) umrahmt und zumindest einen entsprechenden der Membran (M) gegenüberliegenden Teil der Basisplatte (BP) überdeckt und dass im Oberteil (OT) ein Kanal (DK) vorgesehen ist, durch den der Membran (M) ein Druck zuführbar ist.

17. Druckfühler nach Anspruch 16, **dadurch gekennzeichnet**, dass über der Membran (M) eine mit der Lage (GDT) verbundene Lage (GDTM) vorgesehen ist, deren Dicke kleiner als die der Lage (GDT) gewählt ist.

18. Druckfühler nach Anspruch 16 oder 17, **dadurch gekennzeichnet**, dass bei der Verwendung einer mit Bauteilen (EBT) bestückten Systemplatte (SP), im Oberteil (OT) eine zur Aufnahme dieser Bauteile (EBT) geeignete Kammer (K) vorgesehen ist, die vorzugsweise durch Entfernen einer Haube (H) aufschliessbar ist.

19. Druckfühler nach Anspruch 18, **dadurch gekennzeichnet**, dass die Basisplatte (BP) und die Systemplatte (SP) mit Ausnahme der für die Membran (M) und die Bauteile (EBT) vorgesehenen Zonen ganz oder zumindest zur Erzielung einer gleichmässigen Druckverteilung über die Platten (BP, SP) teilweise durch die Lage (GDT) überdeckt sind.

20. Druckfühler nach einem der Ansprüche 16 bis 19, **dadurch gekennzeichnet**, dass die auf der Basisplatte (BP) und die auf der Systemplatte (SP) vorgesehenen Lagen (GDT) miteinander verbunden sind.
